Europäisches Patentamt

European Patent Office

Office européen des brevets

(19)

(11) **EP 1 628 412 A1**

(12) **EUROPEAN PATENT APPLICATION**

(43) Date of publication:
**22.02.2006 Bulletin 2006/08**

(51) Int Cl.:
***H04B 3/54*** (2006.01)

(21) Application number: **04254964.2**

(22) Date of filing: **18.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **X'Max Corp.**
**Chung Ho City,**
**Taipei (TW)**

(72) Inventors:
• **Li, How-Chin**
**No. 14, Lane 15**
**Tao-Uan (TW)**

• **Lin, Ming-Xiong**
**3F, No. 21**
**Taipei (TW)**

(74) Representative: **Holt, Daniel Richard et al**
**Mewburn Ellis LLP**
**York House**
**23 Kingsway**
**London WC2B 6HP (GB)**

(54) **Method and device for transmitting non-broadband signals using power lines as media**

(57)    A method and device for transmitting non-broadband signals using power lines as media is provided, whereby frequencies of numerous kinds of signals (including sounds, images, data information, etc.) are divided firstly, and then such signals are mixed by applying linear algebra to form a mixed transformed signal that is then coupled to an ordinary power line (such as an AC power line) or any of the transmission media, characterized in that time periods are used for dividing frequencies of signals, such that all frequencies of signals chosen fall into the scope of low bandwidths required and are linearly independent.

**FIG. 1**

**Description**

BACKGROUND OF THE INVENTION

FIELD OF THE INVENTION

The present invention relates to a method and device for signal transmission, and more particularly, the present invention pertains to a method and device for transmitting non-broadband signals using power lines as media, with the technology of mixing and separating a plurality of signals being the basis thereof.

DESCRIPTION OF THE RELATED ART

The technology of coupling carrier signals to power lines as signal transmission means between devices has already been applied to control systems of home appliances, yet since factors of high noise rate and signals susceptible to decay that are caused by the nature of power lines seriously affect the quality of communication. Therefore, the difficulties as to how to prevent signals from being interfered by other signals during signal transmission, and how to increase the capacity of signal transmission and efficiency for signal transmission are constantly required to be overcome.

Based upon the prior art, WO 99/48218, which disclosed a power line carrier communication device, whereby a high-speed data processor is assembled with or engaged in the base unit of the power line carrier communication device, so as to speed up the transmission rate while signals become weak. The power line carrier communication device incorporates the power line carrier extension unit, so that as such device transmits data to an electronic equipment of an end user, the power line carrier extension unit enables such electronic equipment to receive or transmit data via standard telephone lines and AC power lines. However, it is highly complicated using means of power line carrier communication to transmit a plurality of signals simultaneously. Thus, a method and device for signal transmission using power lines as media can only be realized by using algorithm capable of mixing and separating a plurality of signals as the basis thereof.

SUMMARY OF THE INVENTION

The object of the present invention is to provide a method for simultaneously transmitting a plurality of signals using power lines as media under non-broadband circumstance.

The object of the present invention is to provide a device for simultaneously transmitting a plurality of signals using power lines as media under non-broadband circumstance.

The present invention may provide a method for simultaneously transmitting a plurality of signals using power lines as media capable of increasing the speed of signal transmission and avoiding overload.

The present invention may provide a device for simultaneously transmitting a plurality of signals using power lines as media capable of increasing the speed of signal transmission and avoiding overload.

The present invention's signal transmission method may avoid signal interference.

The invention's signal transmission device may avoid signal interference.

The signal transmission method may be wire-free and this save costs.

The signal transmission device may be wire-free and this save costs.

According to one preferred embodiment of the present invention, a method and device for transmitting non-broadband signals using power lines as media employs the art disclosed in U.S. Patent No. 6,442,224, entitled "MIXING AND SEPARATING METHOD FOR A PLURALITY SIGNALS" (Taiwan Invention Patent No. 117048) as a basis, whereby frequencies of numerous kinds of signals (including sounds, images, data information, etc.) are divided firstly, then such signals are mixed by applying linear algebra to form a mixed transformed signal that is then coupled to an ordinary power line (such as AC power lines) or any of the transmission media, characterized in that time periods are used to divide frequencies of signals and all frequencies of signals chosen fall into the scope of low bandwidths required and are linearly independent. Thus, common media for transmitting signals can be used for transmitting summed mixing signals with low bandwidths. This kind of design not only increases the quantity of signals transmitted and the efficiency for transmission, but also can avoid network congestion.

Further, the problem of signal interference can be avoided while large quantity of signals being transmitted via a single channel with an ordinary power line due to low bandwidth. As for inherent factors of high noise rate and signals susceptible to decay that are caused by the power lines , the present invention also employs the means of carriers to carry mixed transformed signals with single and low bandwidths, and then filters are used for extracting carriers, so as to separate and restore the plurality of signals. Therefore, the method and device of the present invention enabling the simultaneous transmission of the plurality of signals with power lines as media shall meet the requirements of industrial utility, novelty and inventive step.

BRIEF DESCRIPTION OF THE DRAWINGS

These and other features, aspects and advantages of the present invention will become better understood with regard to the following description, appended claims and accompanying drawings that are provided only for further elaboration without limiting or restricting the present invention, where:

FIGURE 1 shows a schematic architecture of an embodiment of the present invention with regarding to sound signal transmission;

FIGURE 2 shows a block diagram for a transmitting end with signal mixing and separating devices in one of the embodiments of the present invention; and

FIGURE 3 shows a block diagram for a receiving end with signal mixing and separating devices in one of the embodiments of the present invention.

DETAILED DESCRIPTION OF THE PREFERRED EMBODIMENT

The following is a detailed description of the best presently known modes of carrying out the inventions. This description is not to be taken in a limiting sense, but is made merely for the purpose of illustrating the general principles of the inventions.

According to the preferred embodiment of the present invention, a device for transmitting non-broadband signals using power lines as media based upon the technology of mixing and separating signals, employs a power line disposed between a transmitting end and a receiving end for transmitting and receiving a plurality of source signals, which can be sound signals, image signals, data signals and so forth, and those source signals are then mixed to be a mixed transformed signal with a low bandwidth, and then said mixed transformed signal is coupled, under the non-broadband condition, to a ordinary power line (such as an AC power line) or any other transmission medium for simultaneous transmission.

The transmitting end comprises a transmitted signal processor and an interface circuit, wherein the transmitted signal processor is to couple with a power line via the interface circuit, such that the mixed transformed signal with the low bandwidth of the transmitted signal processor is coupled to the power line. The transmitted signal processor receives and transmits a plurality of source signals, and the transmission and reception of each source signal is processed by a signal transformation device and a signal separation device, such that a mixed transformed signal with a low bandwidth is formed by mixing and summing up a plurality of transformed signals according to the characteristics of linear independent coefficients and functions.

Each receiving end thereof comprises a received signal processor and an interface circuit, wherein the received signal processor is to couple with a power line via the interface circuit, such that the mixed transformed signals with low bandwidths are coupled on the power line by the received signal processor. The received signal processor comprises multiple sets of signal transformation devices and signal separation devices and a selector. The received signal processor couples mixed transformed signals from the power line, and chooses, according to the selector, a set of the signal transformation device and the signal separation device so as to receive and correspond to one of the plurality of source signals. The signal transformation device and the signal separation device chosen are to form an independent equation according to linearly independent functions, with a plurality of transformed signals as unknown variables for solving simultaneous equations, so as to restore the corresponding source signals, thus enabling the receiving end and the transmitting end to receive and transmit signals mutually. It is further elaborated next regarding the method for mixing and separating a plurality of source signals between the transmitted signal processor and the received signal processor by using the art disclosed in Taiwan Invention Patent No. 117048 or U.S. Patent No. 6,442,224 as a basis.

The signal mixing method employed by the signal transformation device comprises the following steps:

firstly obtain n samples $S_i(t_j)$ (i=1, 2, ... m ; j=1, 2, ...n) from m (m is a positive integer) source signals $S_i(t)$ (t∈ $[T_0,T_1]$ ; $T_0$, $T_1 \in R$ in $[T_0,T_1]$, where t is a time variable);
Next a collection of coefficient functions { $_i a_j(t)$, i=1, 2, ...m ; j=1, 2, ...n } is chosen, and the coefficient functions $_i a_j(t)$ are rendered to be linearly independent in $[T_0,T_1]$, and finally the transformed function

$$S_i^o(t) = \sum_{j=1}^{n} [_i a_j(t) S_i(t_j)]$$ of S,(t) is obtained.

Subsequently all the transformed functions $S_i^o(t)$ are summed up to obtain $$SM(t) = \sum_{i=1}^{m} S_i^0(t).$$

Therefore, after being mixed, SM(t) is then the mixed transformed signal suitable for a specific bandwidth.

The method for separating signals by the signal separation device comprising the following steps:

mxn samples $S_i(t_j)$ (i=1, 2, ... m ; j=1, 2, ... n) are obtained from the mixed transformed signals SM(t), with each sample $S_i(t_j)$ being corresponding to the coefficient function $_i a_j(t)$;
mxn independent equations are obtained with $S_i(t_j)$ being the unknown variable by relied upon the characteristic of $_i a_j(t)$ mutually causing to be linearly independent in $[T_0,T_1]$; and

The $S_i(t_j)$ is obtained by solving the mxn independent equations via the means of solving simultaneous equations so as to restore each source signal $S_i(t)$.

According to the present invention of a device or method for transmitting non-broadband signals using power lines as media, m source signals $S_i(t)$, wherein i= 1,2,...,m, are transmitted between the transmitting end and the receiving end.

Said method comprises the following steps:

m source signals $S_i(t)$ are dealt with at said transmitting end so as to generate a mixed transformed signal SM(t);

said mixed transformed signal SM(t) is coupled to a power line with a specific bandwidth;

said mixed transformed signal SM(t) is received from said power line; and

said mixed transformed signal SM(t) is sampled at the receiving end so as to selectively restore each said source signal $S_i(t)$. The signal transmission between the transmitting end and the receiving end is characterized in that:

n samples $S_i(t_j)$ (i=1, 2, ... m ; j=1, 2, ... n) from m source signals $S_i(t)$ ($t \in [T_0, T_1]$ ; $T_0, T_1 \in R$ ; t is a time variable) in $[T_0, T_1]$ are obtained at said transmitting end; a collection of coefficient functions ( $_ia_j$(t), i=1, 2, ... m ; j=1, 2, ... n } is chosen, and said coefficient functions $_ia_j(t)$ are rendered to be linearly independent in $[T_0, T_1]$, and finally the transformed function

$$S_i^0(t) = \sum_{j=1}^{n} [_i a_j(t) S_i(t_j)]$$

of $S_i(t)$ is obtained. Subsequently all the transformed functions $S_i^0(t)$ are summed up to obtain

$$SM(t) = \sum_{i=1}^{m} S_i^0(t) \; ;$$

said mixed transformed signals SM(t) are transmitted on said power line with a specific bandwidth; and at said receiving end, mxn samples $S_i(t_j)$ are obtained from the mixed transformed signals SM(t), with each sample $S_i(t_j)$ being corresponding to the coefficient function $_ia_j(t)$; mxn independent equations are obtained with $S_i(t_j)$ being the unknown variable by relied upon the characteristic of $_ia_j(t)$ being linearly independent; $S_i(t_j)$ is obtained by solving the mxn independent equations via the means of solving simultaneous equations so as to restore each source signal $S_i(t)$.

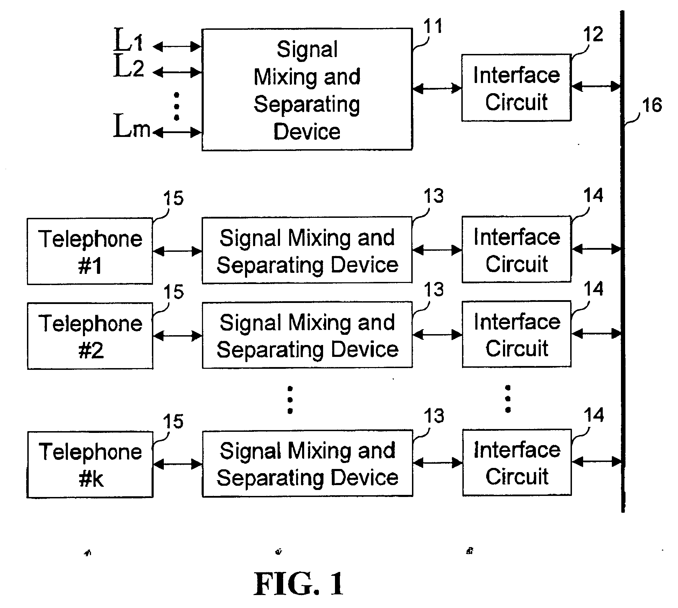

FIG. 1 is a schematic architecture of one embodiment of the present invention with regarding to sound signal transmission. Said embodiment of the present invention is a device for transmitting non-broad signals using power lines as media. Based upon said various signal mixing and separating techniques, a plurality of sound signals are transmitted and received between one transmitting end and a plurality of receiving ends. Signals transmitted between said transmitting end and receiving ends are formed into mixed transformed signals of low bandwidths, and then said signals are coupled to ordinary power lines, such as AC power lines, or any transmission media via an interface circuit with a specific low bandwidth, preferably with 4KHz.

In this embodiment, said transmitting end includes a signal mixing and separating device 11 for receiving and sending m sound signals, and an interface circuit 12 which serves to couple the mixed transformed signals generated by said signal mixing and separating device to a power line 16 with a specific low bandwidth, wherein various signal mixing and separating techniques are employed by said signal mixing and separating device 11 to treat the m sound signals; whereas said receiving end includes a signal mixing and separating device 13 for selectly receiving and sending one of the m sound signals, a telephone 15 for receiving and sending one of the m sound signals selected and treated by said signal mixing and separating device 13, and an interface circuit 14 which serves to couple the mixed transformed signals generated by said signal mixing and separating device to the power line 16 with a specific low bandwidth, wherein various signal mixing and separating techniques are employed by said signal mixing and separating device 13 to select and treat one of the m sound signals.

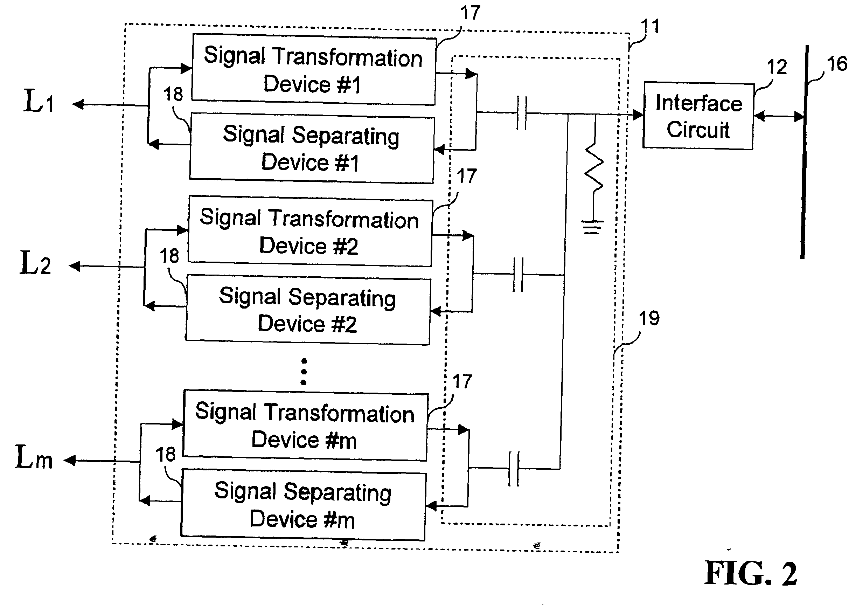

FIG. 2 shows a block diagram for the transmitting end with the signal mixing and separating devices in one of the embodiments of the present invention. Said transmitting end with the signal mixing and separating device 11 includes m sets of signal transformation devices 17 and signal separation devices 18 which serve to receive and send m sound signals respectively, and a signal mixing circuit 19 for mixing and summing up m transformed signals to form a mixed transformed signal. Said transmitting end with the signal mixing and separating device 11 realizes said various signal mixing and separating techniques by use of an integrator, differentiator, multiplier, adder and subtractor, A/D converter, D/A converter, operational amplifier and buffer.

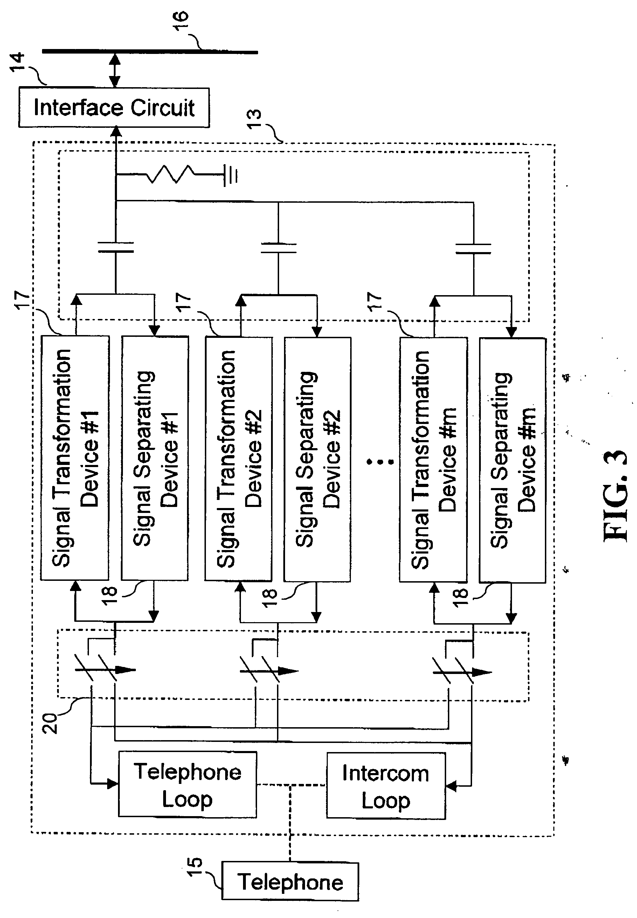

FIG. 3 shows a block diagram for the receiving end with the signal mixing and separating devices in one of the embodiments of the present invention. Said receiving end with the signal mixing and separating device 13 includes m sets of signal transformation devices 17 and signal separation devices 18 which serve to restore m sound signals respectively, a selector 20 to select one device from said m sets of signal transformation devices 17 and signal separation devices 18, and a signal mixing circuit 19 to mix transformed signals to form a mixed transformed signal. Said receiving end with the signal mixing and separating device 13 realizes said various signal mixing and separating techniques by use of an integrator, differentiator, multiplier, adder and subtractor, A/D converter, D/A converter, operational amplifier and buffer.

Although the present invention has been described in considerable detail with reference to certain preferred embodiments thereof, those skilled in the art can easily understand that all kinds of alterations and changes can be made within the spirit and scope of the appended claims. Therefore, the spirit and scope of the appended claims should not be limited to the description of the preferred embodiments contained herein.

**Claims**

1. A method for transmitting non-broadband signals using a power line as media, whereby m source signals $S_i(t)$, wherein i=1, 2,..., m are sent and received between a transmitting end and a receiving end of the power line, comprising the following steps:

   dealing with m source signals $S_i(t)$ at said transmitting end to generate a mixed transformed signal SM(t);
   coupling said mixed transformed signal SM(t) to the power line with a specific bandwidth;
   receiving said mixed transformed signal SM(t) from said power line; and
   sampling said mixed transformed signal SM(t) at the receiving end so as to selectively restore each said source signal $S_i(t)$; wherein signal transmission between said transmitting end and said receiving end is **characterized in that**:

   at said transmitting end, n samples $S_i(t_j)$ (i=1，2，...m;j=1，2，...n) from m source signals $S_i(t)$ ($t \in [T_0,T_1]$ ; $T_0, T_1 \in R$ ; t is a time variable) in $[T_0,T_1]$ are obtained; a collection of coefficient functions ( $_ia_j(t)$, i=1，2，... m ; j=1，2，... n } is chosen, and said coefficient functions $_ia_j(t)$ are rendered to be linearly independent in $[T_0,T_1]$, and finally the transformed function

   $$S_i^0(t) = \sum_{j=1}^{n} [_i a_j(t) S_i(t_j)]$$ of $S_i(t)$ is

   obtained; subsequently all the transformed functions $S_i^0(t)$ are summed up to obtain

   $$SM(t) = \sum_{i=1}^{m} S_i^0(t) ;$$

   said mixed transformed signal SM(t) is transmitted on said power line with the specific bandwidth; and

at said receiving end, mxn samples $S_i(t_j)$ are obtained from said mixed transformed signal SM(t), with each sample $S_i(t_j)$ being corresponding to the coefficient function $_ia_j(t)$; mxn independent equations are obtained with $S_i(t_j)$ being the unknown variable by relied upon the characteristic of $_ia_j(t)$ being linearly independent; $S_i(t_j)$ is obtained by solving the mxn independent equations via the means of solving simultaneous equations so as to restore each source signal $S_i(t)$.

2. The method for transmitting non-broadband signals using power lines as media according to Claim 1, wherein said source signals $S_i(t)$ include text, data, sound or image.

3. The method for transmitting non-broadband signals using power lines as media according to Claim 1, wherein said specific bandwidth of 4KHz is preferred.

4. A device for transmitting non-broadband signals using a power line as media so as to send and receive m source signals between a transmitting end and a receiving end of a power line according to the method for transmitting non-broadband signals using power lines as media as Claim 1.

5. A device for transmitting non-broadband signals using a power line as media so as to send and receive m source signals $S_i(t)$ between a transmitting end and a receiving end of said power line, wherein i= 1, 2,...,m, comprising:

   a transmitting processor dealing with m source signals $S_i(t)$ at said transmitting end to generate a mixed transformed signal SM(t);
   a transmitting interface circuit coupling said mixed transformed signal SM(t) to said power line with a specific bandwidth;
   said power line serving to transmit said mixed transformed signal SM(t) under non-broadband circumstance; and
   a receiving interface circuit receiving said mixed transformed signal SM(t) from said power line;
   a receiving processor sampling said mixed transformed signal SM(t) at said receiving end so as to selectively restore each source signal $S_i(t)$; wherein signal transmission between said transmitting processor and said receiving processor is **characterized in that**:

   at said transmitting end, n samples $S_i(t_j)$ (i=1，2，...m;j=1，2，... n) from m source signals $S_i(t)$ ($t \in [T_0,T_1]$; $T_0, T_1 \in R$; t is time var-

iable) in $[T_0, T_1]$ are obtained;a collection of coefficient functions $\{ _ia_j(t), i=1 , 2, ...m; j=1 , 2 , ...n \}$is chosen, and renders the coefficient function $_ia_j(t)$ to be linearly independent in $[T_0, T_1]$, and finally the transformed function $S_i^0(t) = \sum_{j=1}^{n}[_ia_j(t)S_i(t_j)]$ of $S_i(t)$ is obtained; subsequently all the transformed functions $S_i^0(t)$ are summed up to obtain $SM(t) = \sum_{i=1}^{m} S_i^0(t) ;$ and at said receiving end, mxn samples $S_i(t_j)$ are obtained from said mixed transformed signals $SM(t)$, with each sample $S_i(t_j)$ being corresponding to the coefficient function $_ia_j(t)$; mxn independent equations are obtained with $S_i(t_j)$ being the unknown variable by relied upon the characteristic of $_ia_j(t)$ being linearly independent; $S_i(t_j)$ is obtained by solving the mxn independent equations via the means of solving simultaneous equations so as to restore each source signal $S_i(t)$.

6. The device for transmitting non-broadband signals using a power line as media according to Claim 5, wherein said signal sources $S_i(t)$ include text, data, sound, image etc.

7. The device for transmitting non-broadband signals using a power line as media according to Claim 5, wherein said signal processor at said transmitting end includes m sets of signal transformation devices and signal separation devices serving to send and receive m sound signals, and a signal mixing circuit serving to mix and sum up said m transformed signals to form a mixed transformed signal.

8. The device for transmitting non-broadband signals using a power line as media according to Claim 5, wherein said signal processor and interface circuit at said transmitting end are merged into one.

9. The device for transmitting non-broadband signals using a power line as media according to Claim 5, wherein said receiving end with said signal processor includes m sets of signal transformation devices and signal separation devices for restoring m sound signals, a selector for selecting one of the m sets of said signal transformation devices and signal separation devices, and a signal mixing circuit for mixing transformed signals to form a mixed transformed signal.

10. The device for transmitting non-broadband signals using a power line as media according to Claim 5, wherein said signal processor and interface circuit at said receiving end are merged into one.

11. The device for transmitting non-broadband signals using a power line as media according to Claim 5, wherein said power line is an AC power line.

12. The device for transmitting non-broadband signals using a power line as media according to Claim 5, wherein said specific bandwidth of 4KHz is preferred.

L1

L2

Lm

Signal Mixing and Separating Device — 11

Interface Circuit — 12

— 16

Telephone #1 — 15

Signal Mixing and Separating Device — 13

Interface Circuit — 14

Telephone #2 — 15

Signal Mixing and Separating Device — 13

Interface Circuit — 14

Telephone #k — 15

Signal Mixing and Separating Device — 13

Interface Circuit — 14

FIG. 1

FIG. 2

EP 1 628 412 A1

Interface Circuit

14

16

13

17  17  17

Signal Transformation Device #1
Signal Separating Device #1
Signal Transformation Device #2
Signal Separating Device #2
Signal Transformation Device #m
Signal Separating Device #m

18  18  18

20

Telephone Loop

Intercom Loop

15

Telephone

**FIG. 3**

## EUROPEAN SEARCH REPORT

European Patent Office

**Application Number**

EP 04 25 4964

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y<br>A | US 2004/136393 A1 (BLASCO CLARET JORGE VICENTE ET AL) 15 July 2004 (2004-07-15)<br>* paragraph [0114] - paragraph [0131] *<br>----- | 1-6,8,<br>10-12<br>7,9 | H04B3/54 |
| D,Y<br>A | US 6 442 224 B1 (CHIEN CHIN-YANG)<br>27 August 2002 (2002-08-27)<br>* column 1, line 21 - column 2, line 30 *<br>----- | 1-6,8,<br>10-12<br>7,9 | |
| A | US 5 351 272 A (ABRAHAM KAROLY C)<br>27 September 1994 (1994-09-27)<br>* abstract *<br>----- | 1-12 | |
| | | | **TECHNICAL FIELDS SEARCHED (Int.Cl.7)**<br><br>H04B<br>H04L |

The present search report has been drawn up for all claims

| Place of search | Date of completion of the search | Examiner |
|---|---|---|
| Munich | 12 January 2005 | Giglietto, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 628 412 A1**

## ANNEX TO THE EUROPEAN SEARCH REPORT
## ON EUROPEAN PATENT APPLICATION NO.

EP 04 25 4964

This annex lists the patent family members relating to the patent documents cited in  the above-mentioned European search report.
The members are as contained in the European Patent Office EDP file on
The European Patent Office is in no way  liable for these particulars which are merely  given for the purpose of information.

12-01-2005

| Patent document cited in search report | | Publication date | Patent family member(s) | | Publication date |
|---|---|---|---|---|---|
| US 2004136393 | A1 | 15-07-2004 | ES | 2186531 A2 | 01-05-2003 |
| | | | BR | 0209123 A | 15-06-2004 |
| | | | CA | 2444397 A1 | 31-10-2002 |
| | | | EP | 1388954 A2 | 11-02-2004 |
| | | | WO | 02087104 A2 | 31-10-2002 |
| | | | JP | 2004531944 T | 14-10-2004 |
| US 6442224 | B1 | 27-08-2002 | TW | 393847 B | 11-06-2000 |
| US 5351272 | A | 27-09-1994 | CA | 2135918 A1 | 25-11-1993 |
| | | | EP | 1416645 A2 | 06-05-2004 |
| | | | EP | 0689738 A1 | 03-01-1996 |
| | | | JP | 8502152 T | 05-03-1996 |
| | | | WO | 9323928 A1 | 25-11-1993 |
| | | | US | 6014386 A | 11-01-2000 |

EPO FORM P0459

For more details about this annex : see Official Journal of the European Patent Office, No. 12/82